# EUROPÄISCHE PATENTSCHRIFT

(11) **EP 1 200 303 B1**
(45) Veröffentlichungstag und Bekanntmachung des Hinweises auf die Patenterteilung: **23.02.2005**
(21) Anmeldenummer: 00942309.6
(22) Anmeldetag: 06.07.2000
(51) Int. Cl.: B62M 1/04, B62M 1/20

(54) **LIEGEFAHRRAD MIT KÖRPERANTRIEB**
HUMAN-POWERED CYCLE WHICH IS RIDDEN WHILE LYING DOWN
BICYCLETTE CONDUITE EN POSITION ALLONGEE, A ACTIONNEMENT PAR LES MOUVEMENTS DU CORPS

(30) Priorität: 07.07.1999 DE 19931197
(43) Veröffentlichungstag der Anmeldung: 02.05.2002
(73) Patentinhaber: STROJCAD S.R.O., 071 01 Michalovce (SK)
(72) Erfinder: DZVONIK, Emil, 072 31 Vinne 452 (SK)
(74) Vertreter: Jeck, Anton, Dipl.-Ing.
(86) Internationale Anmeldenummer: PCT/IB2000/000914
(87) Internationale Veröffentlichungsnummer: WO 2001/003996

(56) Entgegenhaltungen:
- DE-A- 4 415 611
- FR-A- 2 728 532

## Beschreibung

Die Erfindung betrifft ein Fahrrad gemäß dem Oberbegriff des Anspruchs 1.

Ein derartiges Fahrrad ist aus der FR-A 1-2 728 532 bekannt. Das Fahrgestell ist durch ein im wesentlichen horizontales Vierkantrohr gebildet, an dem zu beiden Seiten jeweils eine Fußstütze für jeden Fuß längsverschiebbar angeordnet ist. Jede Fußstütze ist mittels eines Seils mit einer zugeordneten, mit einem Kettenblatt verbundenen Seilscheibe des Antriebs verbunden, der im übrigen aus der Freilaufnabe und einer diese antreibenden und einer auf dem Kettenblatt laufenden Kette besteht. Die Fußstützen sind über ein weiteres Seil, das über eine am Vorderende des Vierkantrohrs angeordnete Umlenkscheibe läuft, miteinander verbunden und abwechselnd betätigbar. Ferner ist zu beiden Seiten des Vierkantrohrs jeweils eine Handstütze mit Griff längsverschiebbar angeordnet. Die abwechselnd betätigbaren Handstützen sind mittels weiterer Seile und weiterer Seilscheiben mit dem Kettenblatt verbunden. Die Steuerung der Vorderradgabel geschieht über weitere Seilzüge von den drehbar angeordneten Handgriffen der Handstützen aus.

Ein ähnliches Fahrrad ist ferner aus der JP-A-09095282 bekannt, das jedoch keinen Handantrieb, sondern eine mit der Vorderradgabel verbundene Lenkstange aufweist. Diese bekannten Fahrräder sind ist aufgrund der vielen Seile und Seilscheiben und des getrennten Kettenantriebs kompliziert aufgebaut. Weitere Fahrräder sind in vielerlei Form allgemein bekannt. Bei diesen üblichen Fahrrädern ist das Fahrgestell ein meist dreieckiger Rahmen, an dem die Fußbetätigungsmittel als Tretkurbeln mit mindestens einem Kettenblatt angeordnet sind, das über die Kette das Hinterrad antreibt. Es hat nicht an Versuchen gefehlt, diesen Tretkurbelantrieb zu ändern, um eine bessere Sitzposition, einen geringeren Windwiderstand und / oder eine bessere Ausnutzung der Körperkräfte zu erreichen.

So ist aus der DE-U1-2 9622 231 eine muskelbetriebene Antriebsvorrichtung für ein nicht lenkbares Straßen- und Schienenfahrzeug bekannt, das ein horizontal verlaufendes Fahrgestell mit einem Vorderrad und einem angetriebenen Hinterrad aufweist. Am Fahrgestell sind ein Sitz fest und ein mit Fußstützen versehener Rahmen längsbeweglich angeordnet. Ein Kraftübertragungsglied umfaßt eine Rollenkette und ein elastisches Seil ist an zwei verschiedenen Punkten des Fahrgestells befestigt und über eine vom Benutzer ziehbare Umlenkrolle, über Umlenkrollen des Fahrgestells, Umlenkrollen des Rahmens und über das Antriebsrad so geführt, daß durch Arm- und Beinbewegung ein Vortrieb des Fahrzeugs erzeugt wird. Dabei ist auf dem Fahrgestell ein Sitz angeordnet. Die Nachteile dieser Konstruktion bestehen darin, daß sie kompliziert aufgebaut ist und sich kaum als Fahrrad eignet. Aus der EP-A1-0 706 934 ist ein muskelbetriebenes Fahrzeug in Form eines Fahrrads bekannt, das ein Fahrgestell aufweist, an dessen Vorderende Fußstützen für beide Füße angeordnet sind und an dem sich ein in dessen Längsrichtung bewegbar gelagerter Sitz befindet.

Am Sitz sind die beiden Enden eines Antriebszugmittels befestigt, das über gegensinnige Umlenkrollen des Sitzes, über Umlenkrollen des Fahrgestells und über ein Antriebsrad des Hinterrads geführt ist. Durch Hin- und Herbewegen des Sitzes am Fahrgestell ist ein Vortrieb des Fahrrads erzeugbar. Die Nachteile eines solchen Fahrrads bestehen darin, daß beim Antreiben des Fahrrads nicht auch ein ruhender Körper des Benutzers möglich ist, dem dadurch die Lenkung des Fahrrads erschwert wird, und daß eine Vielzahl von Umlenkstellen für das Antriebszugmittel verwendet wird, das zudem noch mit Federkraftunterstützung zurückgeholt werden muß. Aus der DE-A1-3 516 322 ist ein Dreiradfahrzeug mit einem Fahrgestell in Form eines horizontal verlaufenden Rahmens bekannt, wobei auf den Rahmenlängsholmen ein Rollsitz und ein Zugwagen laufen, der fest mit einem Antriebszugmittel verbunden und mit dem auch die Lenkung des Vorderrads möglich ist. Am Rahmen sind links und rechts feste Fußstützen vorgesehen. Das Antriebszugmittel läuft über eine Umlenkrolle, die am vorderen Abschnitt des Rahmens angeordnet ist, und über das Antriebsrad für die Hinterräder. Diese Antriebsmechanik des Dreirads eignet sich nicht für zweiräddrige Fahrräder. Der Körper des Benutzers kann während des Antriebs auch hier nicht eine ruhende Position einnehmen. Schließlich ist durch die DE-U1-9 103 403 ein muskelbetriebenes Dreiradfahrzeug mit einer mit zwei Vorderrädern versehenen, horizontal schwenkbaren Vorderachse bekannt, an der Fußstützen zum Lenken befestigt sind. Das Fahrzeug ist mit einem Fahrgestell versehen, das einen zwischen Vorderrädern und Hinterrad horizontal verlaufenden Rahmenteil aufweist. Auf diesem Rahmenteil läuft ein Rollsitz. Am Gestellvorderende ist eine Zugtrommel befestigt, die mit einer Freilaufnabe, einer Rückholfeder und einem Zugseil versehen ist. Die Zugtrommel ist ferner mittels einer Kette über Umlenknaben mit dem Hinteradantrieb verbunden. Durch Ziehen am Zugseil und/oder Strecken der Beine unter Zurhilfenahme des Rollsitzes ist ein Fahrradvortrieb erreichbar.

Nachteilig ist jedoch die unsichere Position des Benutzers auf dem Sitz. Die Arme des Benutzers haben keinen festen Halt und die Abstützung der Füße ist wegen der Drehbarkeit der Vorderachse höchst problematisch.

Die Aufgabe der Erfindung besteht darin, ein Fahrrad der im Oberbegriff des Anspruchs 1 genannten Art zu schaffen, das einfach aufgebaut ist und eine einfache, höchst wirksame Antriebsvorrichtung aufweist.

Diese Aufgabe wird mit den Merkmalen des Anspruchs 1 gelöst.

Der Vortrieb des Fahrrads kann dadurch erzeugt werden, daß zunächst durch Strecken der Beine des Benutzers die Fußstütze vorgetrieben wird. Während dieser Antriebsphase ist die Lenkung des Fahrrads am besten möglich, weil der Körper des Benutzers eine ruhige Position einnimmt. Während einer zweiten Antriebsphase wird die Fußstütze durch Armzug am Lenker bei gestreckten Beinen unter Vorschub des Sitzes weiter vorgetrieben. Während dieser beiden Antriebsphasen treibt ein Antriebsmittel das Hinterrad an. Das Zurückholen des Antriebsmittels erfolgt einfach durch Strecken der Arme und Anwinkeln der Beine, wobei durch das Gewicht der Beine die Fußstütze nach unten gedrückt wird und die Freilaufnabe des Hinterrads im Freilauf betrieben wird.

Weitere vorteilhafte Ausbildungen der Erfindung sind in den Unteransprüchen niedergelegt.

Gemäß einer weiteren Ausbildung der Erfindung ist die Schiene im Querschnitt kantig oder verschieden vom Kreis ausgebildet. Dadurch ist die Unverdrehbarkeit von Fußstütze und Sitz an der Schiene auf einfache Weise gesichert.

Gemäß einer zweckmäßigen, weiteren Ausbildung der Erfindung weisen Fußstütze und Sitz jeweils einen auf der Schiene gleitenden Schlitten auf.

Gemäß einer weiteren Ausbildung der Erfindung entspricht die Länge der Schiene mindestens der Summe aus der Beinlänge und der Armlänge des Benutzers. Damit wird die beabsichtigte Funktion des Antriebs voll erfüllt.

Gemäß einer zweckmäßigen, weiteren Ausbildung der Erfindung ist die Vorderradgabel mit Vorderrad unter der Schiene angeordnet und mittels eines Gabelhalters an der Schiene befestigt.

Gemäß einer weiteren Ausbildung der Erfindung verläuft der Gabelhalter mit Gabel schräg nach vorn. Dadurch wird die Federung des Vorderrads verbessert.

Eine weitere, vorteilhafte Ausbildung der Erfindung ist so getroffen, daß die Schenkel der Lenkgabel im wesentlichen zur Vorderradgabel und zum Gabelhalter parallel verlaufen, jeweils nach außen gebogen sind und an ihren freien Enden die Griffe tragen.

Gemäß einer weiteren, vorteilhaften Ausbildung der Erfindung ist an der Fußstütze eine die Kette enthaltende Antriebsschleife festlegbar, die längs der Schiene geführt und zumindest mittels eines am Schienenvorderende angebrachten Umlenkrads und eines in der Nähe des Schienenhinterendes angebrachten Umlenkrads umgelenkt ist.

Gemäß einer weiteren Ausbildung der Erfindung ist die Antriebsschleife über eine am Gabelhalter befestigte Umlenkrolle geführt. Ein möglicher Kontakt der Antriebsschleife mit dem Vorderrad kann somit vermieden werden.

Gemäß einer weiteren Ausbildung der Erfindung ist an der Fußstütze ein Antriebsseil festlegbar ist, dessen anderes Ende auf einer mit der Freilaufnabe verbundenen Seiltrommel aufwickelbar ist, die mittels einer Rückholfeder vorgespannt ist. Dadurch sind Kette und Umlenkrollen nicht mehr erforderlich.

Gemäß einer zweckmäßigen, weiteren Ausbildung der Erfindung verläuft die am hinteren Ende der Schiene befestigte Hinterradgabel schräg nach hinten. Dadurch wird die Federung des Hinterrads verbessert.

Die Erfindung wird nun anhand eines Ausführungsbeispiels näher erläutert. Es zeigen:
- Fig. 1: eine schematisch dargestellte Seitenansicht einer ersten Ausführung eines Fahrrads mit einem in Antriebsausgangsposition befindlichen Benutzer,
- Fig. 2: das Fahrrad der Fig. 1 mit dem in Antriebsendposition befindlichen Benutzer,
- Fig. 3: eine schematisch dargestellte Seitenansicht einer zweiten Ausführung eines Fahrrads,
- Fig. 4: eine Draufsicht auf das Fahrrad der Fig. 3,
- Fig. 5: eine perspektivische Ansicht des in den Figuren 3 und 4 dargestellten Fahrrads mit vorgeschobener Endposition der Fußstütze und des Sitzes,
- Fig. 6: eine perspektivische Ansicht des in den Figuren 3 und 4 dargestellten Fahrrads mit zurückgeschobener Endposition der Fußstütze sowie des Sitzes und
- Fig. 7: eine perspektivische Ansicht des hinteren Teils des Fahrrads der Figuren 3-6.

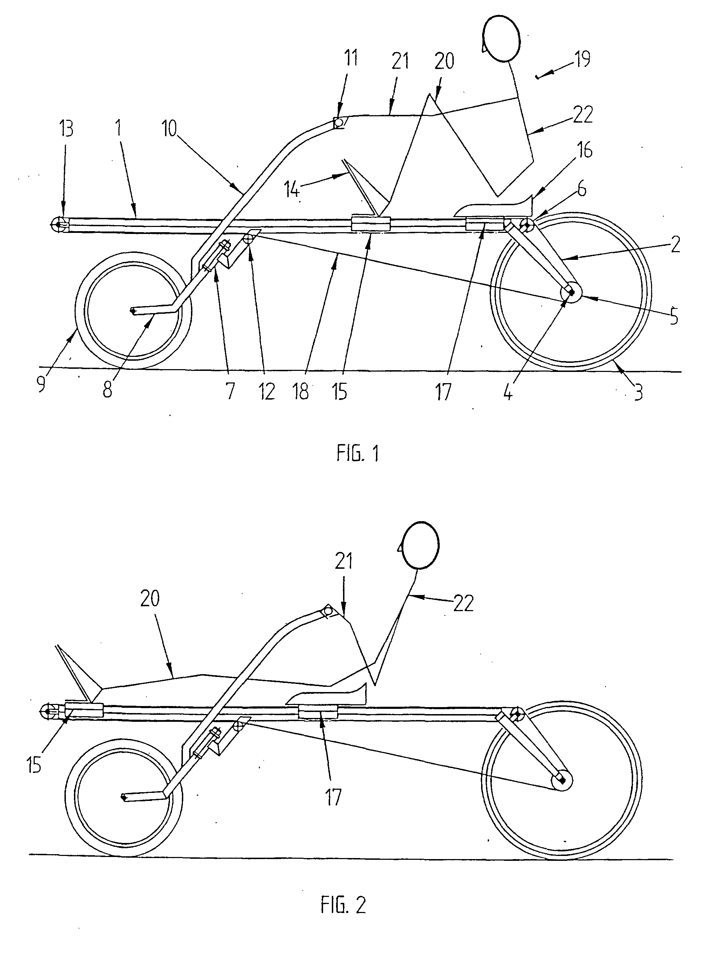

Die Fig. 1 zeigt ein Fahrrad, das als Fahrgestell eine im wesentlichen horizontal verlaufende, im Querschnitt kantige Schiene 1 aufweist. Am Hinterende dieser Schiene ist eine Hinterradgabel 2 befestigt, die schräg nach hinten und unten verläuft. In dieser Hinterradgabel wird ein Hinterrad 3 gehalten, das in bekannter Weise mit einer Freilaufnabe 4 und einem Antriebsrad 5 ausgerüstet ist. Am oberen Ende der Hinterradgabel 2 ist eine Umlenkrolle 6 befestigt.

In einem mittleren Bereich der Schiene 1 ist unterhalb dieser ein Gabelhalter 7 befestigt, in dem eine Vorderradgabel 8 drehbar gelagert ist. Gabelhalter 7 und Vorderradgabel 8 verlaufen schräg nach vorn und unten. Die Vorderradgabel 8 trägt ein Vorderrad 9, das ebenfalls unter der Schiene 1 angeordnet ist. An der Vorderradgabel 8 ist ferner eine Lenkgabel 10 angebracht, die, wie aus der Fig. 1 nicht erkennbar ist, aus zwei Schenkeln besteht, die im wesentlichen zur Vorderradgabel 8 und zum Gabelhalter 7 parallel verlaufen, jeweils nach außen gebogen sind und an ihren freien Enden Griffe 11 tragen. Am oberen Ende des Gabelhalters 7 ist eine Umlenkrolle 12 angebracht.

Eine weitere Umlenkrolle 13 ist am Vorderende der Schiene 1 angebracht. Auf der Schiene 1 sind längsverschieblich und unverdrehbar ein eine Fußstütze 14 für beide Füße tragender Fußstützenschlitten 15 und ein einen Sitz 16 tragender Sitzschlitten 17 angeordnet.

Eine Antriebsschleife 18 ist am Fußstützenschlitten 1 5 festgelegt und verläuft von dort über die Umlenkrolle 13, die Umlenkrolle 12, das Antriebsrad 5, die Umlenkrolle 6 und unter dem Sitz 16 hindurch zurück zum Fußstützenschlitten 15. Die Antriebsschleife besteht aus einem Seil und einer Kette, die im Bereich des Antriebsrads 5 angeordnet ist.

Auf dem Sitz 16 sitzt ein Benutzer 19, der seine Füße bei angewinkelten Beinen 20 auf der Fußstütze 14 abstützt und mit seinen Händen bei gestreckten Armen 21 die Griffe 11 ergreift. In einer ersten Antriebsphase werden die Beine 20 gestreckt, wobei der Fußstützenschlitten 15 vorgetrieben wird und die Antriebsschleife das Hinterrad 3 antreibt. In dieser Antriebsphase ist auch eine Lenkung des Fahrrads optimal möglich. In einer zweiten Antriebsphase werden bei gestreckten Beinen 20 die Arme 21 angewinkelt, wobei der Fußstützenschlitten 15 bis in eine Endstellung weiter vorgetrieben wird und ebenfalls der Sitzschlitten 17 eine Endstellung erreicht. Diese Endstellungen sind aus Fig. 2 erkennbar. Erkennbar ist auch, daß für eine optimale Ausnutzung der Körperkräfte des Benutzers 19 die Länge der Schiene 1 vorzugsweise mindestens der Summe aus der Länge der Beine 20 und der Länge der Arme 21 entsprechen sollte. Auch während dieser zweiten Antriebsphase bleibt das Fahrrad lenkfähig. Die Antriebsschleife 18 wird durch Strecken der Arme 21 und Anwinkeln der Beine 20 wieder zurückgeholt, wobei das Gewicht der Beine 20 auf Fußstütze 14 und Fußstützenschlitten 15 drückt und die Freilaufnabe 4 im Freilauf betrieben wird. Die in Fig. 1 gezeigte Ausgangsposition ist dann wieder erreicht.

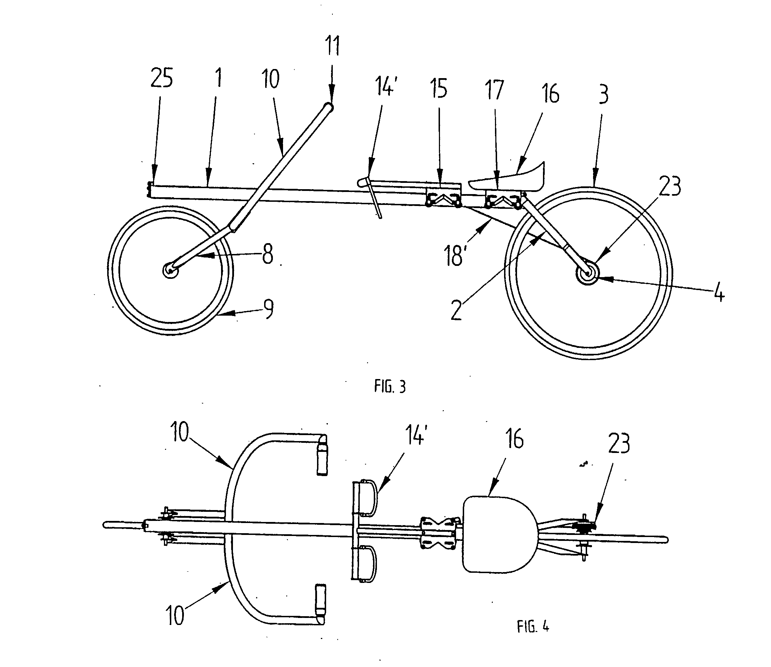

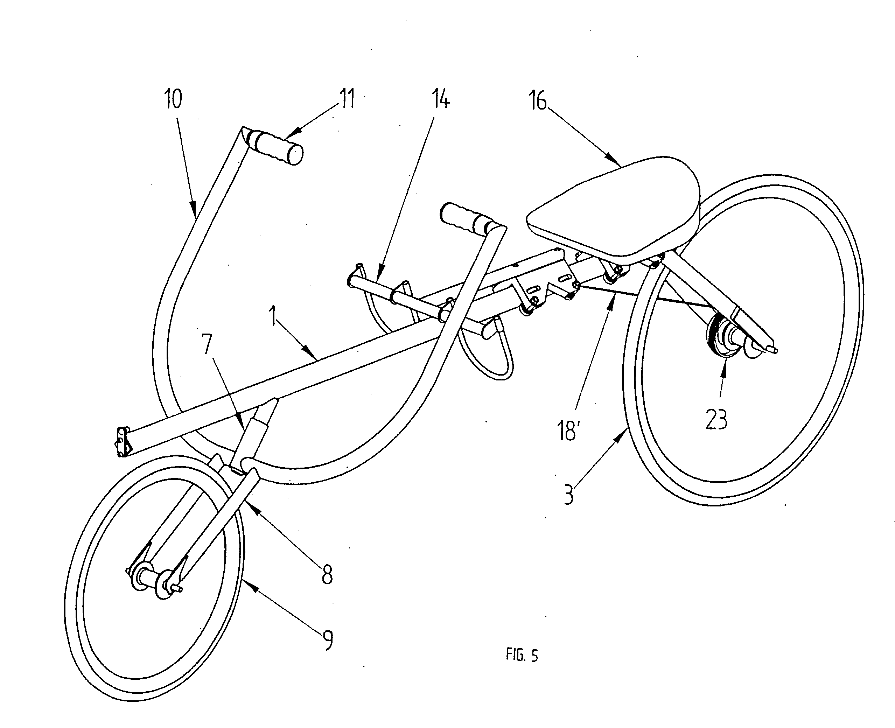

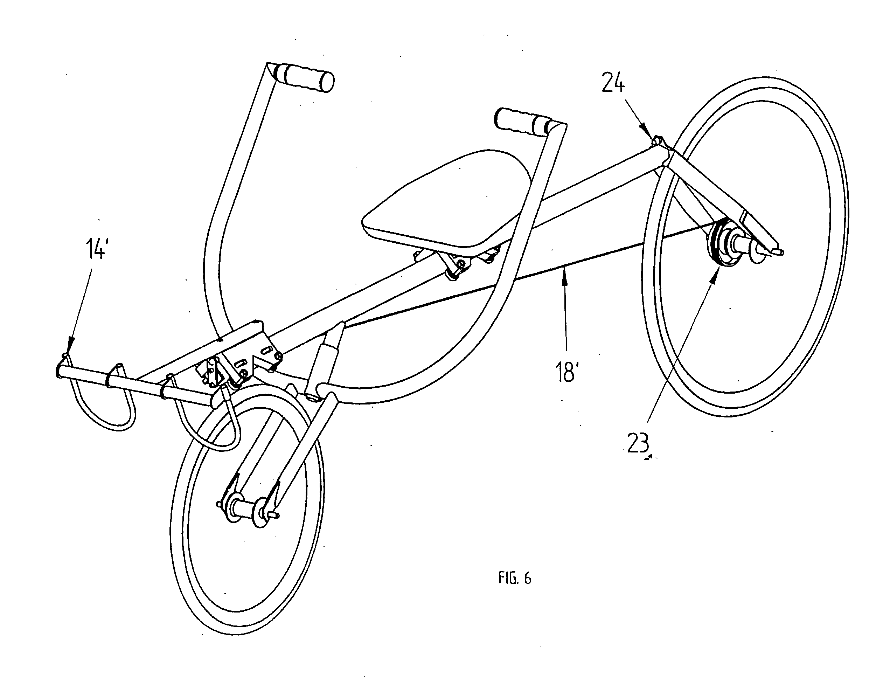

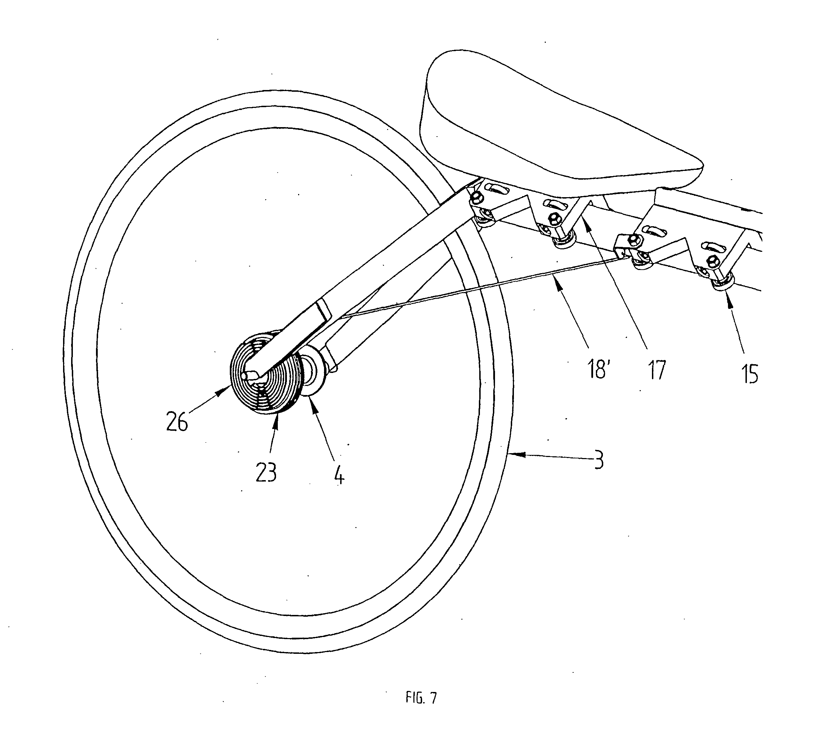

Die in den Figuren 3-7 dargestellte zweite Ausführung des Fahrrads gemäß der Erfindung ist ähnlich wie das vorbeschriebene Fahrrad aufgebaut. Gleiche oder funktionsgleiche Teile wie in den Figuren 1 und 2 sind mit denselben Bezugszeichen versehen worden. Abweichend sind nur das Fehlen von Umlenkrollen und ein anderer Seilantrieb.

Auf der Schiene 1 sind der Fußstützenschlitten 15 und der Sitzschlitten 17 wieder hin- und herfahrbar angeordnet. Der Fußstützenschlitten 15 ist mit der etwas anders gestalteten Fußstütze 14' verbunden. Mit dem Fußstützenschlitten 15 ist auch ein Seil 18' verbunden, dessen anderes Ende auf einer Seiltrommel 23 aufgewickelt ist. Die Seiltrommel 23 ist mit der Freilaufnabe 4 verbunden und weist eine vorgespannte Rückholfeder 26 auf, die das Seil 18' in jeder Lage des Fußstützenschlittens 15 spannt. Ferner sind Gummianschläge 24, 25 an den Enden der Schiene 1 vorgesehen, die den Bewegungsweg der Schlitten 15, 17 begrenzen. Damit werden also keine Kette und keine geschlossene Antriebsschleife mehr verwendet.

## Patentansprüche

1. Fahrrad mit einer Vorderradgabel (8) mit Vorderrad (9), einer mit der Vorderradgabel (8) verbundenen Lenkvorrichtung (10), einer Hinterradgabel (2) mit einem eine Freilaufnabe (4) aufweisenden Hinterrad (3), einem diese Gabeln (8, 2) verbindenden Fahrgestell (1), einem am Fahrgestell (1) befestigten Sitz (16), einem Hinterradantrieb (5, 18) und Fußbetätigungsmitteln (14, 15) für diesen Hinterradantrieb, wobei das Fahrgestell durch eine einzelne, im wesentlichen horizontale Schiene (1) gebildet ist und die Fußbetätigungsmittel (14, 15) in Schienenlängsrichtung längsverschiebbar geführt sind,
**dadurch gekennzeichnet, daß**
- die Fußbetätigungsmittel durch eine Fußstütze (14, 14') für beide Füße gebildet sind,
- der Sitz (16) auf der Schiene (1) in Schienenlängsrichtung längsverschiebbar geführt ist und
- die Lenkvorrichtung durch eine mit Griffen (11) versehene Lenkgabel (10) gebildet ist, zwischen der die Schiene (1) verläuft.

2. Fahrrad nach Anspruch 1,
**dadurch gekennzeichnet,**
**daß** die Schiene (1) im Querschnitt kantig ausgebildet ist.

3. Fahrrad nach Anspruch 1 oder 2,
**dadurch gekennzeichnet,**
**daß** Fußstütze (14) und Sitz (16) jeweils einen auf der Schiene (1) gleitenden Schlitten (15, 17) aufweisen.

4. Fahrrad nach einem der Ansprüche 1 bis 3,
**dadurch gekennzeichnet,**
**daß** die Vorderradgabel (8) mit Vorderrad (9) unter der Schiene (1 ) angeordnet und mittels eines Gabelhalters (7) an der Schiene (1) befestigt ist.

5. Fahrrad nach Anspruch 4,
**dadurch gekennzeichnet,**
**daß** der Gabelhalter (7) mit Gabel (8) schräg nach vorn verläuft.

6. Fahrrad nach einem der Ansprüche 4 oder 5,
**dadurch gekennzeichnet,**
**daß** die Schenkel der Lenkgabel (10) im wesentlichen zur Vorderradgabel (8) und zum Gabelhalter (7) parallel verlaufen, jeweils nach außen gebogen sind und an ihren freien Enden die Griffe (11) tragen.

7. Fahrrad nach einem der Ansprüche 1 bis 6,
**dadurch gekennzeichnet,**
**daß** an der Fußstütze (14) eine die Kette enthaltende Antriebsschleife (18) festlegbar ist, die längs der Schiene (1) geführt und zumindest mittels eines am Schienenvorderende angebrachten Umlenkrads (13) und eines in der Nähe des Schienenhinterendes angebrachten Umlenkrads (6) umgelenkt ist.

8. Fahrrad nach Anspruch 7,
**dadurch gekennzeichnet,**
**daß** die Antriebsschleife (18) über eine am Gabelhalter (7) befestigte Umlenkrolle (12) geführt ist.

9. Fahrrad nach einem der Ansprüche 1 bis 6,
**dadurch gekennzeichnet,**
**daß** an der Fußstütze (14') ein Antriebsseil (18') festlegbar ist, dessen anderes Ende auf einer mit der Freilaufnabe (4) verbundenen Seiltrommel (23) aufwickelbar ist, die mittels einer Rückholfeder (26) vorgespannt ist.

10. Fahrrad nach einem der Ansprüche 1 bis 9,
**dadurch gekennzeichnet,**
**daß** die am hinteren Ende der Schiene (1) befestigte Hinterradgabel (2) schräg nach hinten verläuft.

## Claims

1. Bicycle having a front wheel fork (8) with a front wheel (9), a steering device (10) connected to the front wheel fork (8), a rear wheel fork (2) with a rear wheel (3) having a free-wheeling hub (4), a frame (1) connecting these forks (8, 2), a seat (16) mounted on the frame (1), a rear wheel drive (5, 18) and foot actuation means (14, 15) for this rear wheel drive, the frame being formed by a single essentially horizontal bar (1) and the foot actuation means (14, 15) being guided longitudinally displaceably in the longitudinal direction of the bar, **characterised in that**
- the foot actuation means are formed by a foot support (14, 14') for both feet,
- the seat (16) is guided longitudinally displaceably in the longitudinal direction of the bar on the bar (1) and
- the steering device is formed by a steering fork (10) provided with handles (11), between which steering fork the bar (1) extends.

2. Bicycle according to claim 1,
**characterised in that**
the bar (1) has a polygonal configuration in cross-section.

3. Bicycle according to claim 1 or 2,
**characterised in that**
foot support (14) and seat (16) respectively have a slide (15, 17) sliding on the bar (1).

4. Bicycle according to one of the claims 1 to 3,
**characterised in that**
the front wheel fork (8) with front wheel (9) is disposed under the bar (1) and is mounted on the bar (1) by means of a fork holder (7).

5. Bicycle according to claim 4,
**characterised in that**
the fork holder (7) with fork (8) extends diagonally forwards.

6. Bicycle according to one of the claims 4 or 5,
**characterised in that**
the members of the steering fork (10) extend essentially parallel to the front wheel fork (8) and to the fork holder (7), are bent respectively outwards and carry the handles (11) on their free ends.

7. Bicycle according to one of the claims 1 to 6,
**characterised in that**
a drive loop (18) containing the chain can be attached to the foot support (14), which drive loop is guided along the bar (1) and guided at least by means of one guide wheel (13), which is fixed to the front end of the bar, and by means of one guide wheel (6) which is fixed in the vicinity of the rear end of the bar.

8. Bicycle according to claim 7,
**characterised in that**
the drive loop (18) is guided via a guide roller (12) mounted on the fork holder (7).

9. Bicycle according to one of the claims 1 to 6,
**characterised in that**
a drive cable (18') can be attached to the foot support (14'), the other end of which drive cable can be wound up onto a cable drum (23) connected to the free-wheeling hub (4), said cable drum being pretensioned by means of a restoring spring (26).

10. Bicycle according to one of the claims 1 to 9,
**characterised in that**
the rear wheel fork (2) mounted on the rear end of the bar (1) extends diagonally rearwards.

## Revendications

1. Bicyclette avec une fourche de roue avant (8) équipée d'une roue avant (9), un dispositif de guidage (10) relié avec la fourche de roue avant (8), une fourche de roue arrière (2) équipée d'une roue arrière (3) comprenant un moyeu de roue libre (4), un cadre (1) reliant ces fourches (8, 2), un siège (16) fixé sur le cadre (1), un système d'entraînement de la roue arrière (5, 18) et des moyens d'actionnement par les pieds (14, 15) pour ce système d'entraînement de la roue arrière, le cadre étant formé par un seul rail sensiblement horizontal (1) et les moyens d'actionnement par les pieds (14, 15) pouvant être déplacés dans le sens longitudinal en étant guidés dans la direction longitudinale du rail, **caractérisée**
- **en ce que** les moyens d'actionnement par les pieds sont constitués par un repose-pied (14, 14') pour les deux pieds,
- **en ce que** le siège (16) est guidé sur le rail (1) dans la direction longitudinale du rail en pouvant être déplacé dans le sens longitudinal et
- **en ce que** le dispositif de guidage est formé par une fourche de guidage munie de poignées (11) et entre laquelle s'étend le rail (1).

2. Bicyclette selon la revendication 1, **caractérisée en ce que** le rail (1) a une section anguleuse.

3. Bicyclette selon la revendication 1 ou 2, **caractérisée en ce que** le repose-pied (14) et le siège (16) comprennent respectivement un chariot (15, 17) coulissant sur le rail (1).

4. Bicyclette selon l'une quelconque des revendications 1 à 3, **caractérisée en ce que** la fourche de roue avant (8) munie d'une roue avant (9) est disposée sous le rail (1) et est fixée au rail (1) à l'aide d'un support de fourche (7) .

5. Bicyclette selon la revendication 4, **caractérisée en ce que** le support de fourche (7) avec la fourche (8) s'étend en biais vers l'avant.

6. Bicyclette selon l'une quelconque des revendications 4 ou 5, **caractérisée en ce que** les branches de la fourche de guidage (10) s'étendent sensiblement parallèlement à la fourche de roue avant (8) et au support de fourche (7), sont respectivement coudées vers l'extérieur et portent à leurs extrémités libres les poignées (11).

7. Bicyclette selon l'une quelconque des revendications 1 à 6, **caractérisée en ce que** sur le repose-pied (14) peut être fixée une boucle d'entraînement (18) qui contient la chaîne, qui est guidée le long du rail (1) et qui est déviée au moins au moyen d'une roue de renvoi (13) disposée sur l'extrémité avant du rail et d'une roue de renvoi (6) disposée à proximité de l'extrémité arrière du rail.

8. Bicyclette selon la revendication 7, **caractérisée en ce que** la boucle d'entraînement (18) est guidée par l'intermédiaire d'une poulie de renvoi (12) fixée sur le support de fourche (7).

9. Bicyclette selon l'une quelconque des revendications 1 à 6, **caractérisée en ce que** sur le repose-pied (14') peut être fixé un câble d'entraînement (18') dont l'autre extrémité peut être enroulée sur un tambour de câble (23), qui est relié avec le moyeu de roue libre (4) et qui est mis en précontrainte par l'intermédiaire d'un ressort de rappel (26).

10. Bicyclette selon l'une quelconque des revendications 1 à 9, **caractérisée en ce que** la fourche de roue arrière (2) fixée à l'extrémité arrière du rail (1) s'étend en biais vers l'arrière.
